# DEMANDE DE BREVET EUROPEEN

(11) **EP 4 711 252 A1**
(43) Date de publication de la demande: **18.03.2026**
(21) Numéro de dépôt: 25199853.0
(22) Date de dépôt: 03.09.2025
(51) Int. Cl.: B62D 37/02, B62D 35/02, B62D 35/00

(54) **DISPOSITIF AÉRODYNAMIQUE POUR UN VÉHICULE AUTOMOBILE**

(30) Priorité: 11.09.2024 FR 2409658
(71) Demandeur: Renault s.a.s, 92100 Boulogne Billancourt (FR)
(72) Inventeur: BALDYROU, Emmanuel, 78084 Guyancourt (FR); BOIARCIUC, Andrei-Alexandru, 78084 Guyancourt (FR); LEMONNIER, Matthieu, 78084 Guyancourt (FR); MOULENE, Thierry, 78670 Villennes sur Seine (FR)

(57) **Abrégé**

Dispositif aérodynamique (5) pour un véhicule (1) automobile, caractérisé en ce qu'il comprend :
- une structure (13) destinée à être fixée à une caisse du véhicule,
- un premier diffuseur (11) mobile par rapport à la structure selon une liaison pivot autour d'un premier axe (Y1) entre une position repliée et une position dépliée,
- un deuxième diffuseur (12) mobile par rapport au premier diffuseur selon une liaison glissière suivant un deuxième axe (A2) entre une position repliée et une position dépliée, et
- un mécanisme d'actionnement comprenant un arbre (21) mobile en rotation par rapport à la structure autour d'un troisième axe (Y3) parallèle au premier axe, et au moins un bras (22) reliant le deuxième diffuseur à l'arbre.

## Description

### Domaine Technique de l'invention

L'invention concerne un dispositif aérodynamique pour un véhicule automobile. L'invention porte aussi sur un véhicule automobile comprenant un tel dispositif aérodynamique. L'invention porte encore sur un procédé de fonctionnement d'un tel dispositif aérodynamique.

### Etat de la technique antérieure

La résistance à la pénétration dans l'air participe fortement à la consommation énergétique d'un véhicule automobile. Afin de proposer des véhicules économes et dotés d'une grande autonomie, les constructeurs cherchent à améliorer le coefficient de pénétration dans l'air des véhicules automobiles, également dénommé coefficient de trainée Cx, tout en proposant des silhouettes de véhicules attrayantes et fonctionnelles.

En particulier, l'écoulement de l'air entre le sol et le soubassement d'un véhicule génère des turbulences qui pénalisent le coefficient de pénétration dans l'air. Pour limiter ces turbulences, on connait des véhicules automobiles comprenant un diffuseur agencé en partie arrière d'un soubassement du véhicule. L'efficacité des diffuseurs connus de l'état de la technique n'est significative qu'à partir d'une vitesse très importante et sont donc en général réservés aux véhicules sportifs. De tels diffuseurs manquent donc d'intérêt pour des véhicules ordinaires destinés à circuler sur des routes publiques, sur lesquelles la vitesse maximale est limitée.

On connaît également des dispositifs aérodynamiques actifs, c'est-à-dire des dispositifs aérodynamiques comprenant des éléments mobiles destinés à être déployés à partir d'une certaine vitesse. Les dispositifs aérodynamiques actifs sont généralement très complexes et/ou insuffisamment efficaces.

### Présentation de l'invention

Le but de l'invention est de fournir un dispositif aérodynamique pour un véhicule automobile remédiant aux inconvénients ci-dessus et améliorant les dispositifs aérodynamiques connus de l'art antérieur.

Plus précisément, un premier objet de l'invention est un dispositif aérodynamique simple à fabriquer, réduisant efficacement le coefficient de pénétration dans l'air d'un véhicule, et apte à s'intégrer discrètement et harmonieusement dans la silhouette d'un véhicule.

### Résumé de l'invention

L'invention se rapporte à un dispositif aérodynamique pour un véhicule automobile, le dispositif aérodynamique comprenant:
- une structure destinée à être fixée à une caisse du véhicule,
- un premier diffuseur mobile par rapport à la structure selon une liaison pivot autour d'un premier axe entre une position repliée et une position dépliée,
- un deuxième diffuseur mobile par rapport au premier diffuseur selon une liaison glissière suivant un deuxième axe entre une position repliée et une position dépliée, et
- un mécanisme d'actionnement comprenant un arbre mobile en rotation par rapport à la structure autour d'un troisième axe parallèle au premier axe, et au moins un bras reliant le deuxième diffuseur à l'arbre.

Le mécanisme d'actionnement peut comprendre en outre un moteur électrique configuré pour faire tourner l'arbre autour du troisième axe.

Le premier diffuseur peut comprendre une face externe destinée à être visible depuis l'extérieur du véhicule, et le premier diffuseur recouvrir le deuxième diffuseur lorsque le premier diffuseur et le deuxième diffuseur sont en position repliée.

Le deuxième diffuseur peut être positionné dans le prolongement du premier diffuseur lorsque le premier diffuseur et le deuxième diffuseur sont en position dépliée.

L'au moins un bras peut comprendre une première extrémité fixée rigidement à l'arbre et une deuxième extrémité fixée au deuxième diffuseur selon une liaison pivot autour d'un quatrième axe, parallèle au premier axe.

Le dispositif aérodynamique peut comprendre au moins un moyen de liaison glissière agencé à une interface entre le premier diffuseur et le deuxième diffuseur.

L'invention se rapporte également à un véhicule automobile comprenant un dispositif aérodynamique tel que défini précédemment, le dispositif aérodynamique étant agencé dans une partie arrière inférieure du véhicule.

Le premier diffuseur et le deuxième diffuseur peuvent s'étendre sensiblement horizontalement dans le prolongement d'un soubassement du véhicule lorsqu'ils sont en position dépliée.

Le dispositif aérodynamique peut être logé à l'intérieur d'un logement formé en contrebas d'un bouclier arrière du véhicule, le premier diffuseur refermant ledit logement lorsqu'il est en position repliée.

L'invention se rapporte également à un procédé d'utilisation d'un dispositif aérodynamique tel que défini précédemment, le procédé d'utilisation comprenant :
- la détection d'une vitesse de déplacement du véhicule, puis
- la comparaison de la vitesse de déplacement avec un seuil de vitesse prédéfini, puis
- si la vitesse de déplacement est supérieure ou égale au seuil de vitesse prédéfini, la rotation automatique de l'arbre du dispositif aérodynamique de sorte à déplacer le premier diffuseur et le deuxième diffuseur dans leur position dépliée.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue schématique de l'arrière d'un véhicule automobile équipé d'un dispositif aérodynamique selon un mode de réalisation de l'invention, le dispositif aérodynamique étant en configuration repliée.
La figure 2 est une vue schématique de côté d'une partie arrière du véhicule, le dispositif aérodynamique étant en configuration repliée.
La figure 3 est une vue schématique de côté de la partie arrière du véhicule, le dispositif aérodynamique étant en configuration dépliée.
La figure 4 est une vue en perspective du dispositif aérodynamique en position dépliée.
La figure 5 est une vue en perspective du dispositif aérodynamique en position repliée.
La figure 6 est une vue en perspective et en coupe selon un plan longitudinal et vertical du dispositif aérodynamique en position dépliée.
La figure 7 est une vue de côté du dispositif aérodynamique en position dépliée.
La figure 8 est une vue de dessus du dispositif aérodynamique en position dépliée.

### Description détaillée

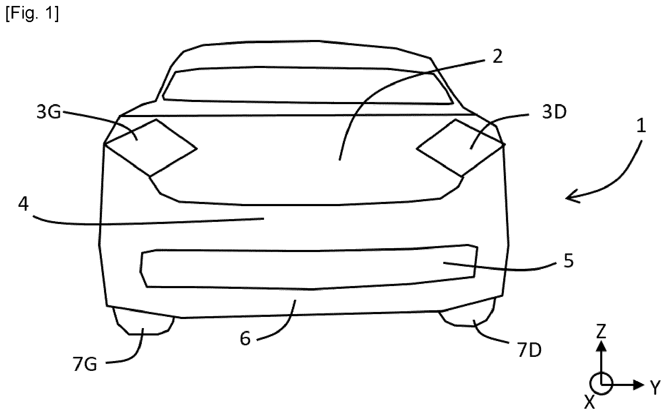

La figure 1 illustre schématiquement un véhicule automobile 1 selon un mode de réalisation de l'invention. Le véhicule 1 peut être un véhicule particulier, notamment une citadine, un véhicule compact, un monospace, une berline, un coupé, ou encore un SUV. Le véhicule 1 peut aussi être un véhicule à motorisation électrique. Il peut donc comprendre une batterie apte à alimenter un moteur électrique en énergie électrique. L'autonomie du véhicule 1 peut ainsi être limitée par la capacité de la batterie.

Le véhicule 1 comprend une face arrière comprenant une porte de coffre 2 encadrée par des dispositifs lumineux 3G, 3D, un bouclier arrière 4 et un dispositif aérodynamique 5 selon un mode de réalisation de l'invention. Le bouclier est positionné en dessous de la porte de coffre 2. Le dispositif aérodynamique 5 est positionné entre le bouclier 4 et un soubassement 6 du véhicule. Le dispositif aérodynamique 5 s'étend de préférence sur une grande partie de la largeur du véhicule, par exemple au moins 50%, voire au moins 70% de la largeur du véhicule. Selon un mode de réalisation non représenté, le dispositif aérodynamique s'étend sur toute la largeur du bouclier arrière 4. Le dispositif aérodynamique 5 peut s'étendre en largeur jusqu'à hauteur des roues arrière gauche 7G et droite 7D du véhicule.

Dans ce document, l'axe X désigne l'axe longitudinal d'un véhicule. En marche avant et en ligne droite, le véhicule progresse de l'arrière vers l'avant selon une direction parallèle à son axe longitudinal. L'axe X est orienté de l'avant vers l'arrière du véhicule, c'est-à-dire dans le sens de la marche arrière. L'axe Y désigne l'axe transversal du véhicule. L'axe Y est orienté de la gauche vers la droite, la gauche et la droite étant définies selon le point de vue d'un conducteur du véhicule. L'axe Z désigne l'axe perpendiculaire à l'axe X et à l'axe Y. On considère que le véhicule repose sur un sol horizontal. L'axe Z est un axe vertical, orienté de bas en haut. Les axes X, Y et Z forment un repère orthogonal. Ce même repère, défini par référence à un véhicule, sera aussi utilisé pour décrire le dispositif aérodynamique 5, même considéré hors du véhicule, puisqu'il est destiné à un montage selon une orientation spécifique dans le véhicule.

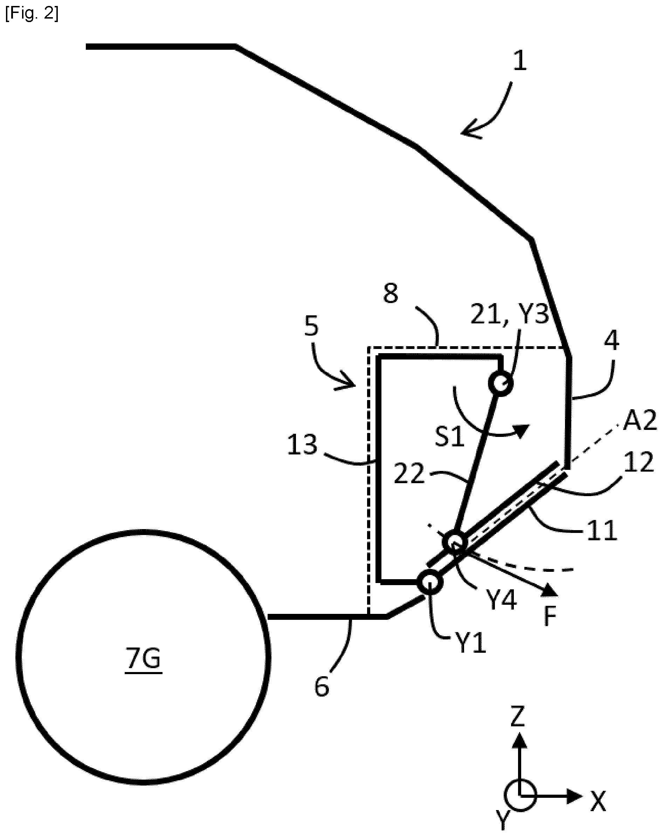

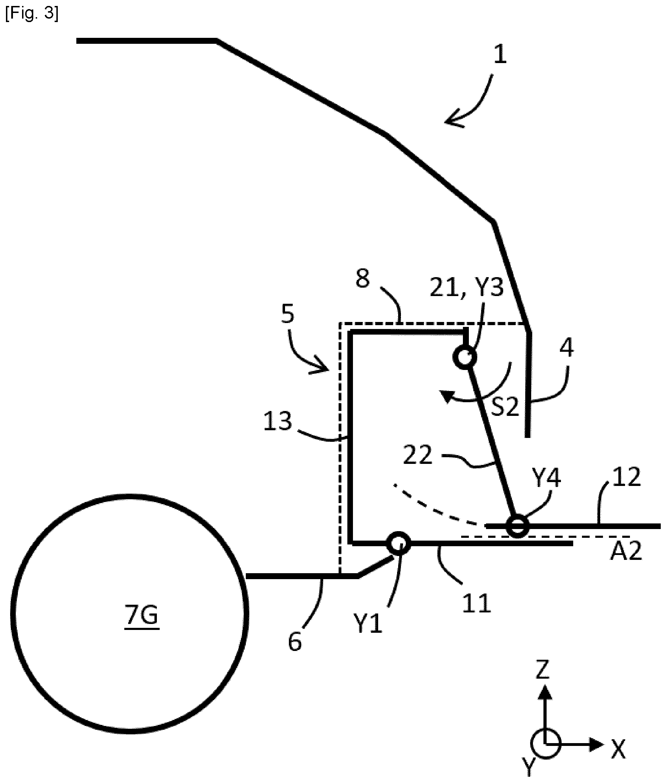

Le dispositif aérodynamique 5 est un dispositif actif, c'est à dire qu'il comprend des éléments mobiles entre au moins deux positions, chaque position produisant un effet aérodynamique différent. En particulier, le dispositif aérodynamique est mobile entre une configuration repliée, illustrée schématiquement sur les figures 1 et 2, et une configuration dépliée, illustrée schématiquement sur la figure 3. Le dispositif aérodynamique 5 est destiné à être commandé par une unité de commande électronique qui sera détaillée par la suite.

Le dispositif aérodynamique 5 comprend un premier diffuseur 11 mobile entre une position repliée et une position dépliée, un deuxième diffuseur 12 mobile entre une position repliée et une position dépliée, et une structure 13 fixée à une caisse du véhicule. La structure 13 est donc fixe dans le référentiel du véhicule. La structure 13 peut être fixée directement à la caisse du véhicule ou indirectement, c'est-à-dire par l'intermédiaire d'un ou plusieurs composants rigides eux même fixés à la caisse du véhicule, lesdits composants étant suffisamment robuste pour supporter le poids du dispositif aérodynamique 5. La structure 13 peut comprendre un cadre, par exemple métallique. Les deux diffuseurs 11, 12 peuvent comprendre chacun une plaque, de préférence de forme au moins grossièrement rectangulaire ou trapézoïdale. Chaque plaque peut être constituée de plastique et/ou de fibres composites.

Le dispositif aérodynamique 5 peut être logé dans un logement 8 du véhicule. Le logement 8 peut être positionné en contrebas du bouclier arrière 4. En position repliée, le dispositif aérodynamique 5 est escamoté et présente seulement une face s'étendant vers l'arrière et vers le haut dans le prolongement du bouclier arrière 4 et du soubassement 6 du véhicule. Ladite face correspond à une face externe 111 du premier diffuseur 11. Ainsi, lorsque le premier diffuseur 11 est en position repliée, il referme le logement 8 dans lequel est logé le dispositif aérodynamique 5. La structure 13 et le deuxième diffuseur 12 sont alors totalement masqués par le premier diffuseur 11. Avantageusement, la face externe 111 du premier diffuseur peut comprendre une surface d'apparat, par exemple une couche colorée harmonisée avec la couleur de la carrosserie du véhicule. La face externe 111 est de préférence lisse.

En configuration repliée, le dispositif aérodynamique 5 ne produit pas d'effet aérodynamique particulier ou un effet aérodynamique très faible, et s'intègre discrètement à la silhouette du véhicule. Notamment, le dispositif aérodynamique ne gène pas la manœuvrabilité du véhicule. Le dispositif aérodynamique ne risque pas de percuter un obstacle lors d'une marche arrière du véhicule.

En position dépliée, ou autrement dit en position déployée, les deux diffuseurs 11, 12 s'étendant sensiblement horizontalement vers l'arrière du véhicule, dans le prolongement du soubassement 6 du véhicule. Dans cette configuration le dispositif aérodynamique prolonge le soubassement vers l'arrière, ce qui a pour effet d'améliorer le coefficient de pénétration dans l'air du véhicule. Par sensiblement horizontalement, on comprend de préférence tout angle compris entre +20° et -20° autour du plan horizontal.

Le premier diffuseur 11 est mobile par rapport à la structure 13 selon une liaison pivot autour d'un premier axe Y1 entre sa position repliée et sa position dépliée. Une liaison pivot est une liaison mécanique comprenant un unique degré de liberté en rotation. Le premier axe Y1 est de préférence un axe parallèle à l'axe transversal Y. Le premier axe Y1 s'étend au niveau d'un bord inférieur du premier diffuseur 11, sensiblement au niveau du soubassement 6 du véhicule. Comme évoqué précédemment, la position repliée est une position dans laquelle le premier diffuseur 11 s'étend en oblique vers le haut et vers l'arrière, et la position dépliée est une position dans laquelle le premier diffuseur 11 s'étend sensiblement horizontalement. Le premier diffuseur 11 peut donc effectuer une rotation d'environ 45° entre sa position repliée et sa position dépliée.

Le deuxième diffuseur 12 est mobile par rapport au premier diffuseur 11 selon une liaison glissière suivant un deuxième axe A2 entre sa position repliée et sa position dépliée. Une liaison glissière est une liaison mécanique comprenant un unique degré de liberté en translation. Le deuxième axe A2 est de préférence un axe perpendiculaire à l'axe transversal Y. Le premier diffuseur 11 étant mobile relativement à la structure 13, le deuxième axe A2 est un axe mobile relativement à la structure 13. Lorsque le premier diffuseur est en position dépliée, le deuxième axe A2 s'étend sensiblement parallèlement à l'axe longitudinal X. La position repliée du deuxième diffuseur 12 est une position dans laquelle le deuxième diffuseur est superposé au premier diffuseur 11. La position dépliée du deuxième diffuseur 12 est une position dans laquelle le deuxième diffuseur est positionné dans le prolongement du premier diffuseur 11, notamment vers l'arrière du premier diffuseur. En positon dépliée, une portion avant du deuxième diffuseur peut rester superposée au premier diffuseur, tandis qu'une portion arrière du deuxième diffuseur est positionnée à l'arrière du bord arrière du premier diffuseur. Le prolongement du premier diffuseur 11 par le deuxième diffuseur 12 rend le dispositif aérodynamique encore plus efficace pour améliorer le coefficient de pénétration dans l'air du véhicule.

En raison de la liaison glissière qui unit le premier diffuseur 11 au deuxième diffuseur 12, les deux diffuseurs 11 et 12 s'étendent toujours parallèlement l'un à l'autre, ils se trouvent toujours soit tous les deux en position dépliée, soit tous les deux en position repliée, soit éventuellement tous les deux dans une position intermédiaire entre la position dépliée et la position repliée. En position dépliée, le deuxième diffuseur 12 est positionné légèrement au-dessus du premier diffuseur 11.

Le dispositif aérodynamique 5 comprend en outre un mécanisme d'actionnement configuré pour déplacer les diffuseurs 11, 12 de leur position repliée à leur position dépliée, et inversement. Le mécanisme d'actionnement comprend un arbre 21 mobile en rotation par rapport à la structure 13 autour d'un troisième axe Y3 parallèle au premier axe Y1, et au moins un bras 22 reliant le deuxième diffuseur 12 à l'arbre 21. Le mécanisme d'actionnement est ainsi configuré pour agir directement sur le deuxième diffuseur 12, et indirectement sur le premier diffuseur 11. En particulier, le mécanisme d'actionnement est configuré pour faire pivoter le premier diffuseur 11 autour du premier axe Y1 par l'intermédiaire du deuxième diffuseur 12.

Comme illustré par une ligne en arc de cercle pointillé sur la figure 2, une rotation de l'arbre 21 et de l'au moins un bras 22 autour du troisième axe Y3 provoque l'application d'une force F sur le deuxième diffuseur 12. L'orientation de la force F varie au cours de la rotation de l'arbre 21. Toutefois, au cours de cette rotation, la force F comprend au moins une première composante orientée perpendiculairement au deuxième axe A2. Cette première composante est transmise au premier diffuseur 11 par l'intermédiaire d'un moyen de liaison glissière à l'interface entre le premier diffuseur et le deuxième diffuseur. L'application de la deuxième force F tend ainsi à faire pivoter le premier diffuseur autour du premier axe Y1. La force F comprend également au moins une deuxième composante orientée parallèlement au deuxième axe A2. Cette deuxième composante tend à faire coulisser le deuxième diffuseur 12 relativement au premier diffuseur 11 suivant le deuxième axe A2.

On comprend donc que pour déplier le dispositif aérodynamique, l'arbre 21 est entrainé en rotation selon un premier sens de rotation identifié par S1 sur la figure 2. Pour replier le dispositif aérodynamique, l'arbre 21 est entrainé en rotation selon un deuxième sens de rotation, identifié par S2 sur la figure 3, et opposé au premier sens S1. Finalement le dépliement et le repliement des deux diffuseurs 11, 12 est relativement simple à exécuter puisqu'il ne requiert que la rotation de l'arbre 21 autour du troisième axe Y3.

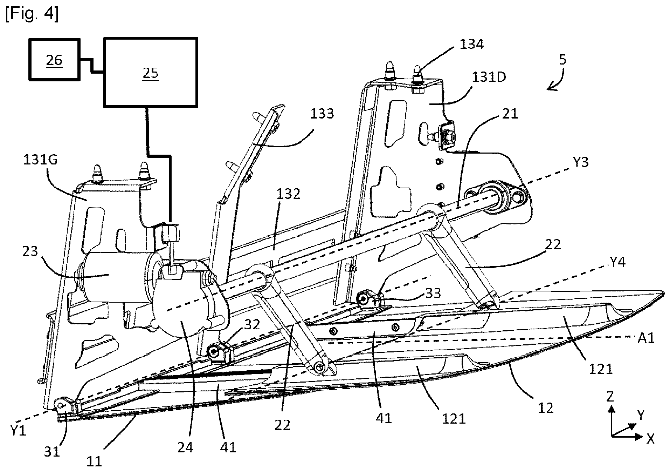

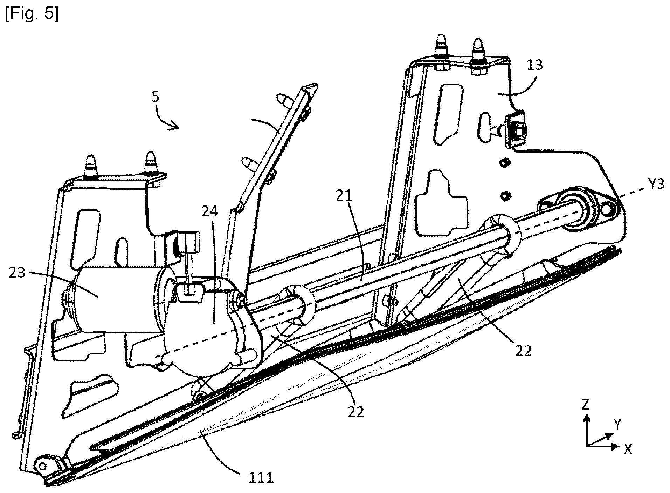

Les figures 4 à 8 illustrent plus en détail un mode de réalisation du dispositif aérodynamique 5. La structure 13 comprend deux équerres 131G, 131D, reliée par une traverse 132. La structure 13 comprend en outre un élément de renfort 133 médian. Les équerres 131G, 131D, la traverse 132 et élément de renfort 133 peuvent être chacun des composants métalliques, notamment obtenus par pliage d'une feuille métallique. Ces composants peuvent être fixés ensemble par vis de fixation et/ou par soudure. La structure 13 est destinée à être fixée à la caisse du véhicule par des vis de fixation 134 coopérant avec des trous prévus dans les équerres 131G, 131D et dans élément de renfort 133.

Le premier diffuseur est articulé relativement à la structure par trois moyens de liaison pivot 31, 32, 33 positionnés le long d'un bord arrière du premier diffuseur 11 et au niveau des extrémités inférieures équerres 131G, 131D et de l'élément de renfort 133. Les trois moyens de liaison pivot 31, 32, 33 peuvent avantageusement comprendre des paliers à roulements pour permettre une rotation particulièrement fluide du premier diffuseur autour du premier axe Y1.

L'arbre 21 est monté pivotant autour du troisième axe Y3 entre les deux équerres 131G, 131D. L'arbre 21 peut également être soutenu par des paliers à roulements. L'arbre 21 comprend une forme tubulaire dont l'axe de révolution est confondu avec le troisième axe Y3. Le troisième axe Y3 est décalé par rapport au premier axe Y1. En particulier, le troisième axe Y3 est positionné au-dessus du premier axe Y1 et d'avantage vers l'arrière par rapport au premier axe Y1.

Le mécanisme d'actionnement comprend en outre deux bras 22 identiques. En variante, ce nombre pourrait bien sûr être différent. Chaque bras 22 comprend une première extrémité 221 fixée rigidement à l'arbre 21, c'est-à-dire selon une liaison de type encastrement. Chaque bras 22 comprend également une deuxième extrémité 222, opposée à la première extrémité 221, fixée au deuxième diffuseur 12 selon une liaison pivot autour d'un quatrième axe Y4. Le quatrième axe Y4 est parallèle au premier axe Y1, et donc également parallèle au troisième axe Y3. Le quatrième axe Y4 est mobile dans le référentiel de la structure 13. Ainsi, la deuxième extrémité 222 de chaque bras 22 est destinée à décrire un cercle centré sur le troisième axe Y3 et dont le rayon est sensiblement égal à la longueur des bras 22. Le deuxième diffuseur 12 est articulé en rotation relativement aux bras 22 par deux moyens de liaison pivot 34 positionnés respectivement au niveau de la deuxième extrémité de chaque bras.

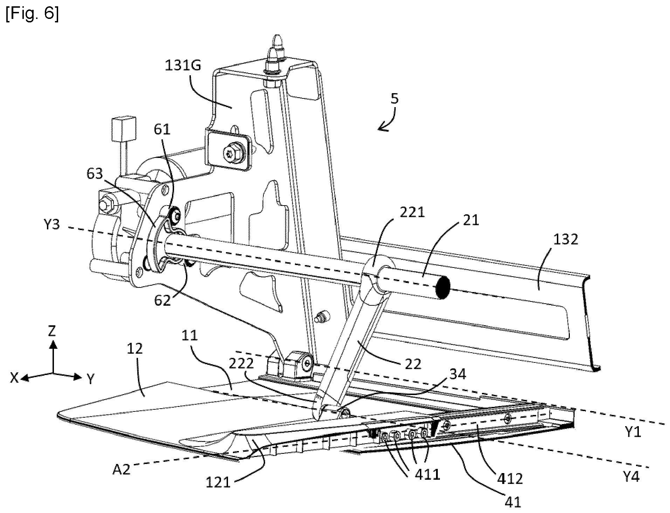

Le deuxième diffuseur 12 est articulé relativement au premier diffuseur 11 par deux moyens de liaison glissière 41 agencés à l'interface entre le premier diffuseur et le deuxième diffuseur. En référence à la figure 6, on observe que les moyens de liaison glissières 41 peuvent chacun comprendre un ensemble de galets 411, de préférence montés sur des paliers à roulements, coopérant avec un élément profilé 412, par exemple un élément profilé à section en forme de U couché. Selon le mode de réalisation présenté, les galets 411 sont reliés au deuxième diffuseur 12 et les éléments profilés 412 sont fixés sur au premier diffuseur 11, notamment à une face interne du premier diffuseur. Avantageusement, le deuxième diffuseur 12 recouvre les galets 411 qui ne sont ainsi pas exposés aux intempéries et aux projections. A cet effet, le deuxième diffuseur 12 comprend avantageusement deux proéminences 121 formée sur une face supérieure du deuxième diffuseur. Les galets 411 sont confinés entre le premier diffuseur et le deuxième diffuseur et sont ainsi bien protégés. En variante, cet agencement pourrait être inversé et/ou le nombre de moyens de liaison glissière pourrait être différent.

Le mécanisme d'actionnement comprend en outre un moteur électrique 23 configuré pour faire tourner l'arbre 21 autour du troisième axe Y3 selon le premier sens S1 ou selon le deuxième sens S2. Le moteur électrique 23 est fixé à la structure 13, notamment à l'équerre 131G. Pour limiter l'encombrement du dispositif aérodynamique 5, le moteur électrique 23 peut être orienté de sorte que son rotor s'étende sensiblement parallèlement à l'axe longitudinal X. Un moyen de transmission 24, comprenant notamment un renvoi d'angle, est alors interfacé avec le moteur électrique 23 et l'arbre 21.

Le moteur électrique 23 peut être commandé par une unité de commande électronique 25 (représentée schématiquement sur la figure 4). L'unité de commande électronique 25 est apte à recevoir une information relative à la vitesse de déplacement du véhicule 1, par exemple fournie par un capteur de vitesse 26 embarqué dans le véhicule. L'unité de commande électronique 25 est configurée pour comparer la vitesse de déplacement du véhicule avec un premier seuil de vitesse prédéfini, par exemple 100km/h. Ensuite, si la vitesse de déplacement est supérieure ou égale au premier seuil de vitesse, l'unité de commande électronique 25 émet un signal électrique de commande qui active le moteur électrique 23 de sorte à faire tourner l'arbre 21 selon le premier sens S1, c'est-à-dire de sorte à déplacer le premier diffuseur 11 et le deuxième diffuseur 12 dans leur position dépliée. De même, l'unité de commande électronique 25 est configurée pour comparer la vitesse de déplacement du véhicule avec un deuxième seuil de vitesse prédéfini, par exemple 90km/h. Ensuite, si la vitesse de déplacement est inférieure ou égale au deuxième seuil de vitesse, l'unité de commande électronique 25 émet un signal électrique de commande qui active le moteur électrique 23 de sorte à faire tourner l'arbre 21 selon le deuxième sens S2, c'est-à-dire de sorte à déplacer le premier diffuseur 11 et le deuxième diffuseur 12 dans leur position repliée. Avantageusement le deuxième seuil est strictement inférieur au premier seuil, de sorte à éviter le dépliement et le repliement intempestif du dispositif aérodynamique lorsque la vitesse de déplacement du véhicule oscille autour d'une vitesse donnée. Pour assurer la maintenance du dispositif aérodynamique, l'unité de commande électronique peut également commander le moteur électrique pour déployer le dispositif aérodynamique lorsque le véhicule est à l'arrêt.

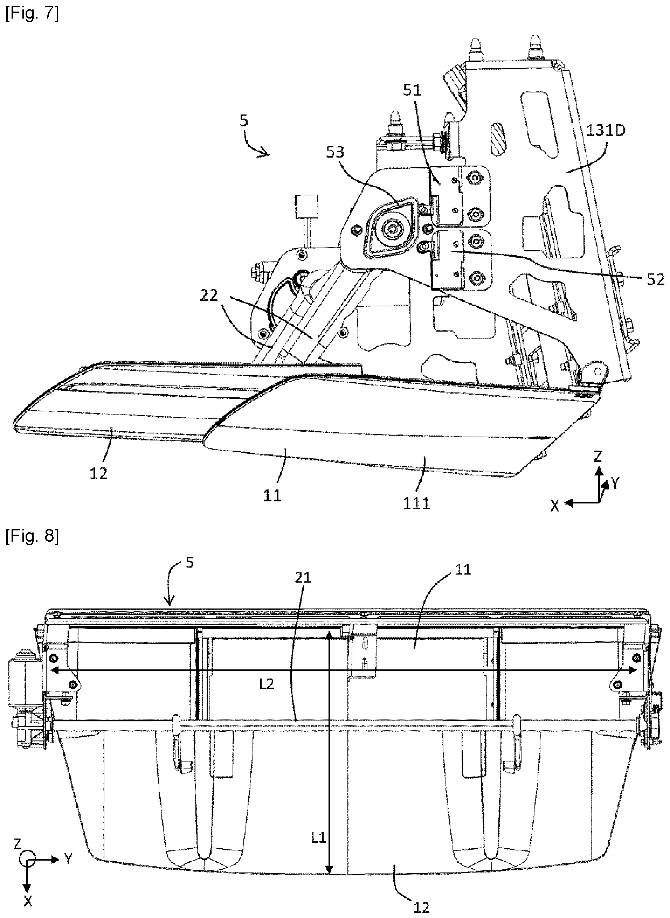

Avantageusement, le dispositif aérodynamique 5 comprend en outre un moyen de détection de la position repliée et de la position dépliée des deux diffuseurs 11, 12. Ceci permet de confirmer que les deux diffuseurs se trouvent bien dans les positions souhaitées et de désactiver le moteur électrique 23. En référence à la figure 7, le moyen de détection comprend notamment un premier un premier capteur 51 et un deuxième capteur 52, tous deux fixés à la structure 13, notamment à l'équerre 131D. Le premier capteur 51 et le deuxième capteur 52 sont avantageusement reliés électriquement à l'unité de commande électronique 25. Le moyen de détection comprend de plus un contacteur 53, fixé à une première extrémité de l'arbre 21. Le contacteur 53 coopère avec le premier capteur 51 lorsque le premier diffuseur et le deuxième diffuseur sont en position dépliée, et coopère avec le deuxième capteur 52 lorsque le premier diffuseur et le deuxième diffuseur sont en position repliée.

En complément, le dispositif aérodynamique 5 comprend également un moyen de butée définissant la position dépliée et la position repliée des diffuseurs 11, 12. En référence à la figure 6, le moyen de butée comprend notamment une première butée 61 et une deuxième butée 62, toutes deux fixées à la structure 13, notamment à l'équerre 131G. Les butées 61, 62 peuvent être par exemple des plots en caoutchouc. Le moyen de butée comprend de plus un élément en relief 63, fixé à une deuxième extrémité de l'arbre 21. L'élément en relief 63 coopère avec la première butée 61 lorsque le premier diffuseur et le deuxième diffuseur sont en position dépliée, et coopère avec la deuxième butée 62 lorsque le premier diffuseur et le deuxième diffuseur sont en position repliée.

La figure 8 permet d'apprécier la surface horizontale formée par la combinaison des deux diffuseurs 11, 12 en position dépliée. Cette surface horizontale peut comprendre une longueur L1 supérieure ou égale à 400mm selon l'axe longitudinal X et une largeur L2 supérieure ou égale à 1000mm selon l'axe transversal Y. Le dispositif aérodynamique 5 offre ainsi une surface considérable qui améliore significativement le coefficient de pénétration dans l'air Cx du véhicule 1.

Grâce à l'invention, on dispose d'un dispositif aérodynamique simple à fabriquer, réduisant efficacement le coefficient de pénétration dans l'air d'un véhicule, et apte à s'intégrer discrètement et harmonieusement dans la silhouette d'un véhicule. En particulier, grâce à l'invention, des gains du coefficient de pénétration dans l'air Cx peuvent être compris entre 0,005 et 0,010. L'invention permet ainsi de réduire significativement la consommation en énergie du véhicule, et donc d'augmenter l'autonomie du véhicule.

## Revendications

1. Dispositif aérodynamique (5) pour un véhicule (1) automobile, **caractérisé en ce qu'**il comprend :
- une structure (13) destinée à être fixée à une caisse du véhicule,
- un premier diffuseur (11) mobile par rapport à la structure selon une liaison pivot autour d'un premier axe (Y1) entre une position repliée et une position dépliée,
- un deuxième diffuseur (12) mobile par rapport au premier diffuseur selon une liaison glissière suivant un deuxième axe (A2) entre une position repliée et une position dépliée, et
- un mécanisme d'actionnement comprenant un arbre (21) mobile en rotation par rapport à la structure autour d'un troisième axe (Y3) parallèle au premier axe, et au moins un bras (22) reliant le deuxième diffuseur à l'arbre.

2. Dispositif aérodynamique selon la revendication précédente, **caractérisé en ce que** le mécanisme d'actionnement comprend en outre un moteur électrique (23) configuré pour faire tourner l'arbre (21) autour du troisième axe.

3. Dispositif aérodynamique selon l'une des revendications précédentes, **caractérisé en ce que** le premier diffuseur (11) comprend une face externe (111) destinée à être visible depuis l'extérieur du véhicule, et **en ce que** le premier diffuseur recouvre le deuxième diffuseur (12) lorsque le premier diffuseur et le deuxième diffuseur sont en position repliée.

4. Dispositif aérodynamique selon l'une des revendications précédentes, **caractérisé en ce que** le deuxième diffuseur (12) est positionné dans le prolongement du premier diffuseur (11) lorsque le premier diffuseur et le deuxième diffuseur sont en position dépliée.

5. Dispositif aérodynamique selon l'une des revendications précédentes, **caractérisé en ce que** l'au moins un bras (22) comprend une première extrémité (221) fixée rigidement à l'arbre (21) et une deuxième extrémité (222) fixée au deuxième diffuseur selon une liaison pivot autour d'un quatrième axe (Y4), parallèle au premier axe (Y1).

6. Dispositif aérodynamique selon l'une des revendications précédentes, **caractérisé en ce qu'**il comprend au moins un moyen de liaison glissière (41) agencé à une interface entre le premier diffuseur (11) et le deuxième diffuseur (12).

7. Véhicule (1) automobile, **caractérisé en ce qu'**il comprend un dispositif aérodynamique selon l'une des revendications précédentes, le dispositif aérodynamique étant agencé dans une partie arrière inférieure du véhicule.

8. Véhicule selon la revendication précédente, **caractérisé en ce que** le premier diffuseur (11) et le deuxième diffuseur (12) s'étendent sensiblement horizontalement dans le prolongement d'un soubassement (6) du véhicule lorsqu'ils sont en position dépliée.

9. Véhicule selon la revendication précédente, **caractérisé en ce que** le dispositif aérodynamique (5) est logé à l'intérieur d'un logement (8) formé en contrebas d'un bouclier arrière (4) du véhicule, le premier diffuseur (11) refermant ledit logement lorsqu'il est en position repliée.

10. Procédé d'utilisation d'un dispositif aérodynamique (5) selon l'une des revendications 1 à 6, **caractérisé en ce qu'**il comprend :
- la détection d'une vitesse de déplacement du véhicule, puis
- la comparaison de la vitesse de déplacement avec un seuil de vitesse prédéfini, puis
- si la vitesse de déplacement est supérieure ou égale au seuil de vitesse prédéfini, la rotation automatique de l'arbre (21) du dispositif aérodynamique de sorte à déplacer le premier diffuseur et le deuxième diffuseur dans leur position dépliée.
